# EUROPÄISCHE PATENTANMELDUNG

(11) **EP 0 618 175 A2**
(43) Veröffentlichungstag der Anmeldung: **05.10.1994**
(21) Anmeldenummer: 94250042.2
(22) Anmeldetag: 22.02.1994
(51) Int. Cl.: C02F 1/78

(54) **Ozon-Wasseraufbereitungsanlage**

(30) Priorität: 31.03.1993 DE 9305111 U
(71) Anmelder: INSTITUT FÜR BIOPROZESS- UND ANALYSENMESSTECHNIK e.V., D-37308 Heiligenstadt (DE); UTG - UMWELTTECHNIK UND GERÄTEBAU GmbH, D-99092 Erfurt (DE)
(72) Erfinder: Gastrock, Gunter, Dipl.-Ing., D-37308 Heiligenstadt (DE); Metze, Josef, Dr.-Ing., D-37308 Heiligenstadt (DE); Fricke, Martin, Dipl.-Ing., D-99091 Erfurt (DE)
(74) Vertreter: Maikowski, Michael, Dipl.-Ing. Dr.

(57) **Zusammenfassung**

Die Erfindung betrifft eine Ozon-Wasseraufbereitungsanlage, insbesondere zur Aufbereitung von Trinkwasser, unter Verwendung eines Ozonreaktors sowie von Förderpumpen, Ventilen und Filtern. Um die kontinuierliche Bereitstellung von aufbereitetem Wasser, insbesondere Trinkwasser, zu ermöglichen, sind erfindungsgemäß dem Ozonreaktor (1) mehrere Behälter (2, 3) zugeordnet, die gleichermaßen Zwischenbehälter für das entnommene Rohwasser und Vorratsbehälter für das aufbereitete Wasser sind.

## Beschreibung

Die Erfindung betrifft eine Ozon-Wasseraufbereitungsanlage gemäß dem Oberbegriff des Anspruchs 1.

Neben stationären Großanlagen für die Entkeimung von Wasser und für die Trinkwasseraufbereitung sind bereits mobile Anlagen bekannt geworden. So wird in der DE-OS 32 08 912 eine mobile Ozon-Wasseraufbereitungsanlage beschrieben, deren Kernstück ein Wasservorratsbehälter ist, durch den das aufzubereitende Wasser im Kreislauf gepumpt wird. Hierzu ist zwischen dem Auslauf und dem Einlauf des Wasservorratsbehälters eine Rohrleitung angeordnet. Dieser Rohrleitung ist ein Ozongenerator zugeordnet, von dem aus Ozon in den Wasserkreislauf gelangt. Die Reaktion des Wassers mit dem Ozon erfolgt hauptsächlich in der Rohrleitung. Diese hat deshalb eine Länge von mehreren Metern. Der Vorratsbehälter hat eine Zuleitung für Rohwasser mit einem mechanischen Filter.

Beim Betrieb der Anlage wird zunächst der Vorratsbehälter mit Wasser gefüllt und bereits während des Wassereinlaufs wird das Wasser mit Ozon behandelt. Nach Füllung des Vorratsbehälters wird es mehrfach im Kreislauf durch die Rohrleitung gepumpt, wobei kontinuierlich Ozon zugeleitet wird. Nachdem das Wasser den erforderlichen Reinheitsgrad hat, wird die Anlage abgeschaltet, und das Wasser steht im Vorratsbehälter zum Verbrauch bereit.

Diese Anlage hat den Nachteil, daß Trinkwasser diskontinuierlich zur Verfügung steht, denn solange es im Vorratsbehälter zur Verfügung gestellt wird, kann kein Rohwasser aufbereitet werden.

Zur Minderung dieses Nachteils kann das Volumen des Vorratsbehälters vergrößert werden. Dann ergibt sich aber der Nachteil, daß sich bei geringer Wasserentnahme das Wasser zu lange im Behälter befindet und insbesondere bei mobilen Anlagen, die höheren Temperaturen ausgesetzt sind, die Gefahr des Faulens des Wassers besteht.

Zur Beseitigung dieses Nachteils ist aus der DE-OS 33 13 723 bekannt, den Vorratsbehälter zu kühlen. Daraus leitet sich aber der Nachteil des zusätzlichen Energieverbrauchs ab, der aber gerade bei mobilen Anlagen, die vor allem auch bei Katastrophen einsetzbar sein müssen, unerwünscht ist.

Der Erfindung liegt deshalb die Aufgabe zugrunde, mit einer Ozon-Wasseraufbereitungsanlage, die auch mobil einsetzbar sein soll, eine kontinuierliche Bereitstellung von aufbereitetem Wasser, insbesondere Trinkwasser, zu ermöglichen.

Erfindungsgemäß wird das durch die kennzeichnenden Merkmale des Anspruchs 1 erreicht.

Durch die Zuordnung mehrerer Behälter zu einem Ozonreaktor, die gleichermaßen Zwischenbehälter für das entnommene Rohwasser und Vorratsbehälter für das aufbereitete Wasser sind, ist die kontinuierliche Entnahme von aufbereitetem Wasser möglich. Während in einem oder meherer Behältern aufbereitetes Wasser zur Verfügung steht, kann in einem weiteren Behälter Rohwasser aufbereitet werden.

Ein weiterer Vorteil besteht darin, daß durch die Zuordnung von mehreren Behältern zu einem Ozonreaktor eine Wasseraufbereitung auch über einen längeren Zeitraum erfolgen kann, ohne daß eine Rohwasserquelle zur Verfügung steht. So können die Behälter einer mobilen erfindungsgemäßen Anlage an einer Wasserentnahmestelle zunächst mit Rohwasser gefüllt werden. Während der Fahrt zu einem Ort, an dem kein Wasser zur Verfügung steht, kann dann bereits mit der Wasseraufbereitung begonnen werden, so daß am Einsatzort einerseits sofort aufbereites Wasser zur Verfügung steht, andererseit aber auch weiteres Rohwasser aufbereitet werden kann.

Es ist zweckmäßig, daß in der Zulaufleitung zum Ozonreaktor ein Dreiwege-Ventil und in der Abflußleitung des Ozonreaktors ein weiteres Dreiwege-Ventil angeordnet ist.

Es ist zweckmäßig, daß die Behälter parallel zum Ozonreaktor geschaltet sind.

Es ist weiterhin zweckmäßig, daß in der Zulaufleitung zum Ozonreaktor ein Dreiwege-Ventil und in der Abflußleitung des Ozonreaktors ein weiteres Dreiwege-Ventil angeordnet ist.

Weiterhin ist es zweckmäßig, daß die Wasser-Zulaufleitung zum Ozon-Reaktor über ein Dreiwegeventil mit jeweils einer separaten Wasserablaßstelle verbunden ist. Mit diesem ist es möglich, den Wasserkreislauf zu unterbrechen und aufbereitetes Wasser direkt dem Wasserauslauf zuzuleiten.

Der Ein- und Auslaß des Ozonreaktors ist unter Zwischenschaltung von Ventilen und/oder Absperrhähnen mit den Behältern verbunden, so daß wahlweise Behälter an den Ozonreaktor anschließbar sind bzw. von diesem getrennt werden können.

Es ist weiterhin zweckmäßig, daß im Wasserzulauf der Behälter Membranfilter für die Vorreinigung des Wassers angeordnet sind.

Die Erfindung soll in einem Ausführungsbeispiel anhand von Zeichnungen erläutert werden. Es zeigen:
- Fig. 1: den Aufbau der erfindungsgemäßen Anordnung in einer schematischen Darstellung
- Fig. 2: die technische Ausführung der erfindungsgemäßen Anordnung

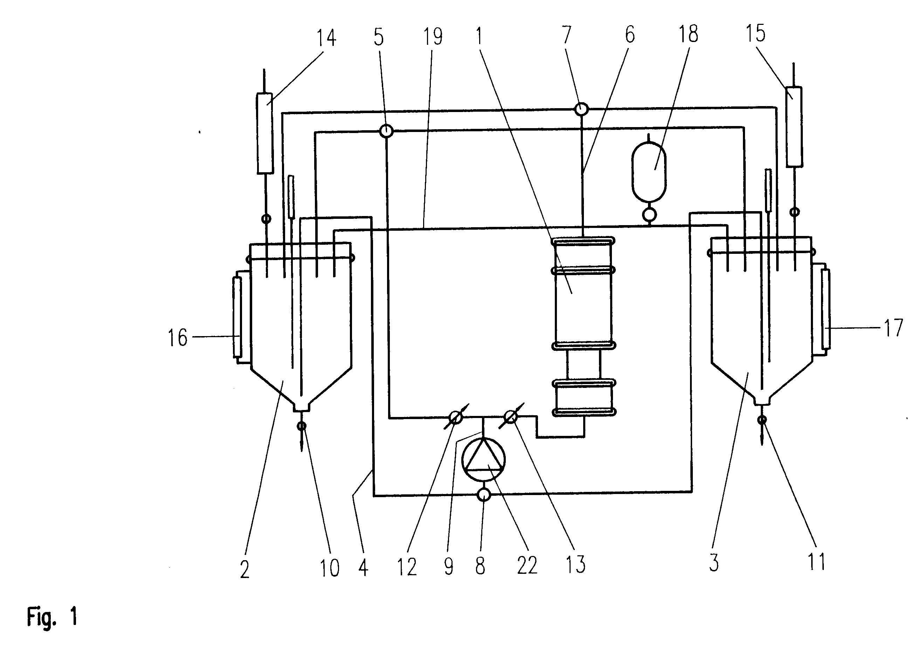

Die Anordnung der Fig.1 hat einen Ozonreaktor 1 dem zwei Behälter 2, 3 zugeordnet sind. Die Zulaufleitung 4 des Ozonreaktors ist über ein Dreiwege-Ventil 8 mit den Behältern 2 und 3 verbunden. Die Abflußleitung 6 des Ozonreaktors ist über ein Dreiwege-Ventil 7 mit den Behältern 2 und 3 verbunden.

Im Wasserzulauf zu den Behältern sind Membranfilter 14, 15 für die Vorreinigung des Rohwassers vorgesehen. An den Behältern 2, 3 sind Füllstandsanzeigen 16, 17 angebracht. Ein Aktivkohlefilter 18, das über eine Ozonleitung 19 mit den Behältern verbunden ist, schließt das Gassystem zur Atmosphäre hin ab, und verhindert ein Entweichen von Ozon aus den Behältern 2, 3 in die Umwelt.

Die Anlage funktioniert in der Weise, daß zunächst Rohwasser über das entsprechende Membranfilter in einen Behälter eingelassen wird. Nach dem Füllen wird das Wasser über die Zulaufleitung 4 in den Ozon-Reaktor 1 gepumpt, wo dem Wasser das dort erzeugte Ozon zugesetzt wird. Über die Abflußleitung 6 wird das mit Ozon versetzte Wasser wiederum dem jeweiligen Behälter zugeführt und anschließend über die Zulaufleitung 4 erneut dem Ozonreaktor zugeführt. Derart kann das Wasser mehrfach im Kreislauf durch den Ozonreaktor geleitet werden, bis das Wasser den erforderlichen Reinheitsgrad aufweist. Nun kann das Wasser entweder in dem entsprechenden Behälter gespeichert werden, oder an der zugeordneten Wasserablaßstelle 10 bzw. 11 entnommen werden.

Während der Behandlung des Wassers des einen Behälters kann der zweite Behälter bereits mit Rohwasser gefüllt werden und unmittelbar nach Abschluß der Behandlung des Wassers aus dem ersten Behälter kann mit der Behandlung des Wassers aus dem zweiten Behälter begonnen werden.

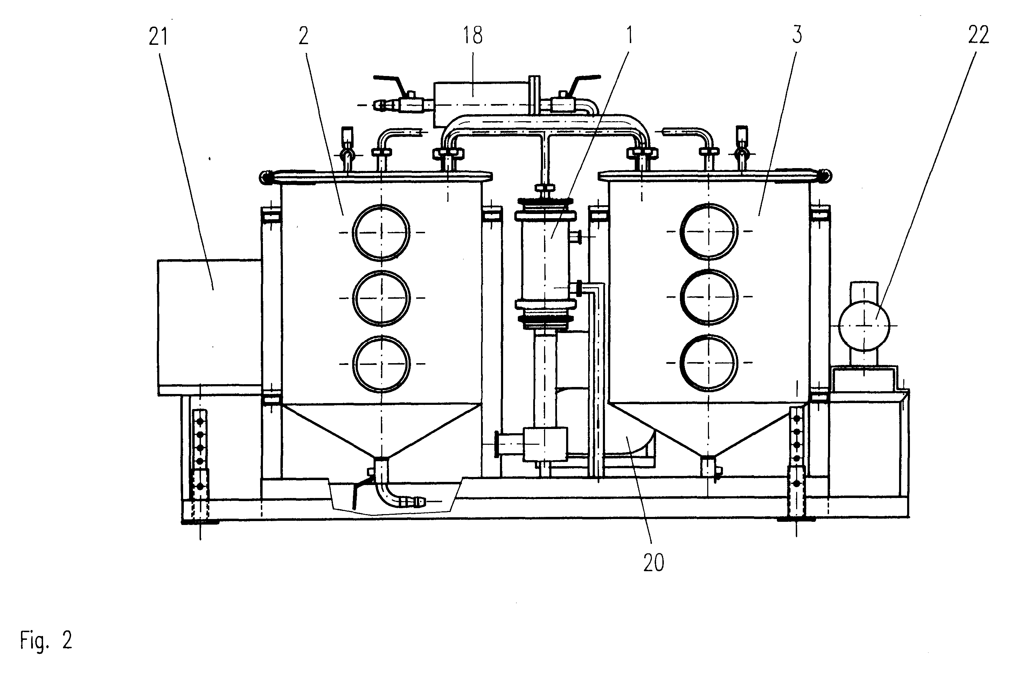

In der Fig. 2 ist der technische Aufbau einer erfindungsgemäßen Anlage dargestellt. Im Zentrum der Anlage ist der Ozonreaktor 1 angeordnet, dem an jeder Seite einer der Behälter 2 und 3 zugeordnet ist. Zur Anlage gehört weiterhin ein Kompressor 20 zur Versorgung des Ozonreaktors mit Luft sowie eine Steuerelektronik 21 für die Steuerung der gesamten Anlage. Für die Wasserförderung ist eine Prozeßpumpe 22 vorgesehen.

## Patentansprüche

1. Ozon-Wasseraufbereitungsanlage, insbesondere zur Aufbereitung von Trinkwasser, unter Verwendung eines Ozonreaktors, von Förderpumpen, Ventilen und Filtern, **dadurch gekennzeichnet,** daß dem Ozonreaktor (1) mehrere Behälter (2, 3) zugeordnet sind, die gleichermaßen Zwischenbehälter für das entnommene Rohwasser und Vorratsbehälter für das aufbereitete Wasser sind.

2. Ozon-Wasseraufbreitungsanlage nach Anspruch 1, **dadurch gekennzeichnet,** daß die Behälter (2, 3) parallel zum Ozonreaktor (1) angeordnet sind und wechselweise an den Ozonreaktor (1) anschließbar sind.

3. Ozon-Wasseraufbereitungsanlage nach einem der Ansprüche 1 und 2, **dadurch gekennzeichnet,** daß in der Zulaufleitung (4) zum Ozonreaktor ein Dreiwegeventil (8) und in der Abflußleitung (6) des Ozonreaktors ein weiteres Dreiwegeventil (7) angeordnet ist.

4. Ozon-Wasseraufbereitungsanlage nach einem der Ansprüche 1 bis 3, **dadurch gekennzeichnet,** daß im Wasserzulauf zu den Behältern (2, 3) Membranfilter (14, 15) angeordnet sind.
